# FASCICULE DE BREVET EUROPEEN

(11) **EP 3 774 186 B1**
(45) Date de publication et mention de la délivrance du brevet: **01.06.2022**
(21) Numéro de dépôt: 19719350.1
(22) Date de dépôt: 29.03.2019
(51) Int. Cl.: B25B 27/00, B25B 27/14, F17C 13/00, B23P 19/08, B63B 25/16, F17C 3/00

(54) **PRÉ-ASSEMBLAGE DE PIÈCES**
VORMONTAGE VON TEILEN
PRE-ASSEMBLY OF PARTS

(30) Priorité: 30.03.2018 FR 1852826
(43) Date de publication de la demande: 17.02.2021
(73) Titulaire: Gaztransport et Technigaz, 78470 Saint-Rémy-lès-Chevreuse (FR)
(72) Inventeur: LAURAIN, Nicolas, 78470 SAINT REMY LES CHEVREUSE (FR); LESEC, Samuel, 78470 SAINT REMY LES CHEVREUSE (FR); PRIETO, Maxime, 78470 Saint Remy les Chevreuse (FR); BLASSIAU, Marc, 78470 Saint Remy les Chevreuse (FR)
(74) Mandataire: Loyer & Abello
(86) Numéro de dépôt international: PCT/FR2019/050747
(87) Numéro de publication internationale: WO 2019/186083

(56) Documents cités:
- EP-A1- 0 371 834
- EP-A1- 1 834 893
- EP-A1- 2 829 486
- WO-A1-2017/103500
- FR-A1- 2 798 902
- FR-A1- 2 903 333
- FR-A1- 3 004 511
- FR-A5- 2 088 813

## Description

La présente invention concerne le domaine des assemblages mécaniques et plus particulièrement ceux comprenant un arbre, tel que une tige lisse ou filetée (goujon), sur lequel on vient monter une pluralité de pièces. Ces pièces sont percées d'un trou, de section correspondant sensiblement à la section de l'arbre, de manière à accueillir ledit arbre. Ces pièces peuvent être choisies parmi : rondelle, entretoise, joint, ressort, écrou, ou autre. Lors du montage chacune des pièces de la pluralité est engagée sur l'arbre. Pour des applications critiques, tant le type, que l'orientation et le nombre de chaque pièce doit être respecté. Ceci peut être délicat lorsque le montage est réalisé dans des conditions de mauvais éclairage, de manque d'espace, de difficulté de positionnement, de difficulté d'accès ou encore de mobilité (véhicule, plate-forme flottante, etc.). De telles conditions peuvent être rencontrées dans de nombreux domaines de l'industrie, notamment l'industrie automobile, le bâtiment ou la construction navale.

Le document EP1834893 décrit un pré-assemblage et un procédé de fabrication d'un pré-assemblage selon les préambules des revendications 1 et 14 respectivement. Il décrit notamment une gaine pour l'emballage des joints de forme ronde. La gaine est obturée longitudinalement et latéralement par des lignes de soudures. La gaine comprend des prédécoupes entre les lignes de soudures et les joints pour permettre le retrait de la gaine après placement de l'ensemble gaine et joints dans un tube distributeur.

Une idée à la base de l'invention est de proposer un pré-assemblage comprenant tout ou partie des pièces destinées à être montée sur un arbre, en type, orientation et nombre adaptés aux besoins du montage, solidarisées en un unique objet, afin de rendre leur manipulation plus aisée.

L'invention concerne un pré-assemblage de pièces aptes à être montées sur un arbre selon la revendication indépendante 1.

Selon une autre caractéristique, la nappe souple de solidarisation comprend un film plastique.

Selon une autre caractéristique, la nappe souple de solidarisation comprend une gaine thermo rétractée.

Selon une autre caractéristique, la nappe souple de solidarisation est épargnée ou fragilisée au niveau du passage de l'arbre.

Selon une autre caractéristique, la nappe souple de solidarisation comprend au moins une bande périphérique entourant complétement la surface latérale de la pile.

Selon une autre caractéristique, la nappe souple de solidarisation comprend au moins une bande axiale s'étendant selon une direction axiale de la pile sur une portion de la surface latérale de la pile.

Selon l'invention, la nappe souple de solidarisation comprend un adhésif pour adhérer sur les pièces et/ou sur elle-même.

Selon une autre caractéristique, la nappe souple de solidarisation est prédécoupée pour faciliter son retrait après montage.

Selon une autre caractéristique, la pile comprend des rondelles Belleville en nombre impair. Selon une autre caractéristique , la pille comprend en outre un écrou.

Selon une autre caractéristique, le pré-assemblage comprend un marquage, de manière à indiquer une orientation axiale de la pile. Ce marquage permet ainsi de créer un système de détrompage.

L'invention concerne encore un procédé de fabrication d'un pré-assemblage de pièces aptes à être montées sur un arbre selon la revendication indépendante 14.

Selon une autre caractéristique, le procédé comprend encore, après l'étape de réalisation, une étape de vérification de la pile réalisée, par mesure de la dimension de la pile, selon la direction de l'arbre.

Selon un mode de réalisation, une paroi isolante, notamment pour cuve de stockage d'un fluide cryogénique, qui comporte un organe de retenue incluant au moins un tel pré-assemblage, ledit organe de retenue mettant en prise au moins un bloc isolant pour retenir le bloc isolant sur une surface de support.

Une telle paroi isolante peut faire partie d'une cuve étanche et thermiquement isolante installée dans une installation de stockage terrestre, par exemple pour stocker du GNL ou installée dans une structure flottante, côtière ou en eau profonde, notamment un navire méthanier, une unité flottante de stockage et de regazéification (FSRU), une unité flottante de production et de stockage déporté (FPSO) et autres.

Selon un mode de réalisation, un navire pour le transport d'un produit fluide, notamment liquide froid, comporte une double coque et une cuve précitée disposée dans la double coque.

Selon un mode de réalisation, l'invention fournit aussi un procédé de chargement ou déchargement d'un tel navire, dans lequel on achemine un produit fluide à travers des canalisations isolées depuis ou vers une installation de stockage flottante ou terrestre vers ou depuis la cuve du navire précité, selon la revendication indépendante 16.

Selon un mode de réalisation, un système de transfert pour un produit fluide, notamment liquide froid, le système comportant le navire précité, des canalisations isolées agencées de manière à relier la cuve installée dans la coque du navire à une installation de stockage flottante ou terrestre et une pompe pour entrainer un flux de produit fluide à travers les canalisations isolées depuis ou vers l'installation de stockage flottante ou terrestre vers ou depuis la cuve du navire.

D'autres caractéristiques, détails et avantages de l'invention ressortiront plus clairement de la description détaillée donnée ci-après à titre indicatif en relation avec des dessins sur lesquels :
- la figure 1 est une vue de profil d'un pré-assemblage selon l'art antérieur, prêt à être monté sur un arbre,
- la figure 2 est une vue de profil du pré-assemblage de la figure 1, adapté selon un mode de réalisation de l'invention par ajout d'une nappe souple de solidarisation,
- la figure 3 montre, en vue développée, un mode de réalisation d'un film plastique destiné à former une nappe souple de solidarisation,
- la figure 4 montre en vue de profil un mode de réalisation d'un pré-assemblage selon l'invention, plus particulièrement adapté à une application de fixation d'un bloc isolant dans une paroi de cuve de méthanier.
- la figure 5 montre une représentation schématique écorchée d'une cuve de navire méthanier et d'un terminal de chargement/déchargement de cette cuve.
- la figure 6 est une vue schématique en perspective d'une nappe de solidarisation sous la forme d'une bande périphérique munie d'une ligne de prédécoupe.

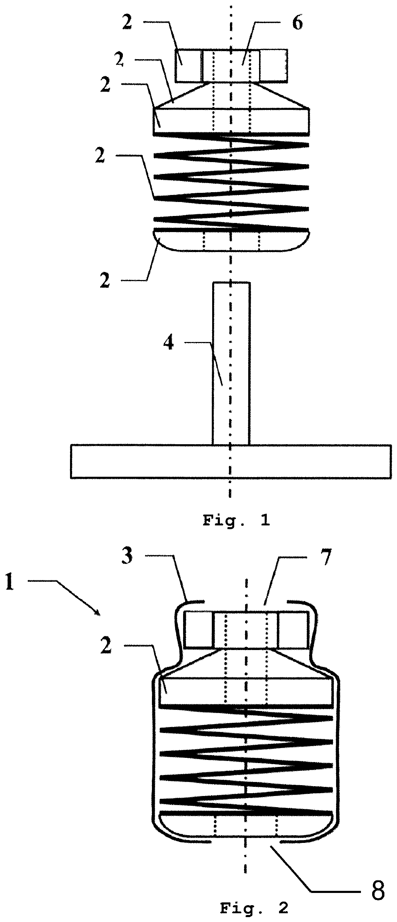

La figure 1 illustre un cas fréquent en assemblage mécanique. Un arbre 4, lisse ou fileté, doit accueillir une pile de pièces 2. Ces pièces sont percées d'un trou 6 apte à permettre le passage dudit arbre 4. Elles sont le plus souvent, mais pas nécessairement, de révolution autour de l'arbre 4. Les pièces 2 peuvent être des rondelles de toute sorte, des coupelles, des joints, des ressorts, etc. en fonction des besoins de l'assemblage.

Le type de chaque pièce 2, sa quantité et son ordre dans la pile, ainsi que son orientation dans le cas d'une pièce 2 non symétrique, doivent le plus souvent être respectés. Aussi dans des conditions difficiles, il peut être délicat de réaliser in situ la bonne pile et de maintenir ensemble les pièces 2 jusqu'à leur montage sur l'arbre 4.

Aussi l'invention propose de pré-assembler les pièces 2, en atelier ou en usine, où il est possible de vérifier la pile, et de les solidariser au moyen d'une nappe souple de solidarisation 3.

Pour cela, tel qu'illustré à la figure 2, il est réalisé une pile des pièces 2 nécessaires à l'assemblage, disposées en configuration de montage, soit en types, nombres et orientations conformes à la disposition finale de montage. Les pièces de cette pile sont ensuite maintenues ensemble par une nappe souple de solidarisation 3 agissant par enveloppement total ou partiel d'une surface latérale des pièces 2 de la pile.

Selon un mode de réalisation avantageux, la nappe souple de solidarisation 3 comprend un film plastique. Une épaisseur faible, caractéristique d'un film, est avantageuse en ce qu'elle ne modifie pas substantiellement les dimensions de la pile et ne modifie ainsi pas le procédé de montage.

Le plastique utilisé ici peut être de tout type. Il est avantageusement transparent afin de permettre de contrôler les pièces 2 présentes, leur disposition et leur état.

Selon un mode de réalisation la nappe souple de solidarisation 3 comprend une gaine thermo rétractée. Une gaine thermo rétractable permet avantageusement une réalisation aisée : la gaine est mise en place autour des pièces 2, avantageusement selon l'axe de l'arbre 4, un passage à l'air chaud réalise ensuite un rétreint de la gaine autour des pièces 2 et assure leur maintien ensemble et la tenue de la nappe souple de solidarisation 3 sur les pièces 2.

Tout autre mode de réalisation peut encore être envisagé. Ainsi un enrobage au moyen d'un fil ou ruban peut permettre de réaliser la nappe souple de solidarisation 3 par bobinage autour de la pile.

Alternativement ou complémentairement, la nappe souple de solidarisation peut être réalisée par un vernis ou une cire enveloppant la pile et déposé par trempage dans un bain ou encore par dépôt au pinceau ou au pistolet.

Selon une autre caractéristique, la nappe souple de solidarisation 3 peut réaliser un enveloppement complet de la pile. Dans ce cas lors du montage l'arbre 4 perce la nappe souple de solidarisation 3 au droit du trou 6 aux deux extrémités de la pile.

Ce perçage peut être facilité par une fragilisation de la nappe souple de solidarisation 3 au niveau des deux passages de l'arbre 4.

Afin de faciliter le montage, selon une autre caractéristique, la nappe souple de solidarisation 3 peut encore être épargnée au niveau du passage de l'arbre 4. Selon le mode de réalisation cette épargne est initiale ou finale ; Initiale : on ne place pas ou ne dépose pas de matière lors de la réalisation de la nappe souple de solidarisation 3. Finale : la nappe souple de solidarisation 3 est réalisée intégral puis est percée de deux ouvertures 7 et 8 au droit du trou 6 aux deux extrémités de la pile.

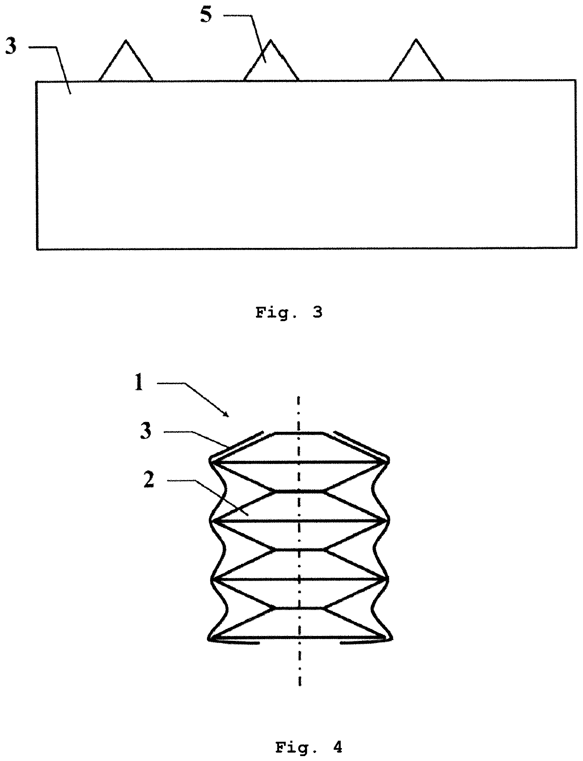

Selon un mode de réalisation, la nappe souple de solidarisation 3 comprend au moins une bande périphérique. Un exemple d'une telle bande périphérique est illustré à la figure 3. Cette bande est dite périphérique en ce qu'elle destinée à être enroulée autour de la périphérie de la pile afin de former la nappe souple de solidarisation 3. Les repères 5, triangulaires sur la figure 3 sont, en configuration finale, tous disposés sur une surface d'extrémité de la pile, autour de l'arbre 4 une fois monté.

Selon un autre mode de réalisation, alternatif ou complémentaire, la nappe souple de solidarisation 3 comprend au moins une bande axiale. Une telle bande est dite axiale en ce qu'elle est déposée sur la pile parallèlement à l'axe de la pile et ne recouvre pas toute la surface latérale de la pile. Dans ce cas, la prédécoupe peut s'étendre sur une partie ou la totalité d'une largeur de la bande axiale.

Selon l'invention, la nappe souple de solidarisation 3 comprend encore un adhésif pour adhérer sur les pièces 2 et/ou sur elle-même 3. L'adhésif peut ainsi permettre la tenue d'un fil ou ruban enroulé en bobine autour de la pile, tant sur la pile que sur le fil ou ruban lui-même. L'adhésif peut encore permettre la tenue d'une bande périphérique ou axiale, tant sur la pile que sur la bande elle-même. Ainsi la bande périphérique peut tenir par adhésion sur la pile et au moyen d'une sur-longueur, par adhésion sur elle-même.

La nappe souple de solidarisation 3 peut, notamment grâce à son très faible encombrement, être laissée en place, y compris après montage. Si l'on souhaite au contraire le retirer une fois le montage réalisé, une prédécoupe est avantageusement réalisée sur la nappe souple de solidarisation 3, par exemple sous forme de pointillés, afin de faciliter un retrait de la nappe souple de solidarisation 3 après montage.

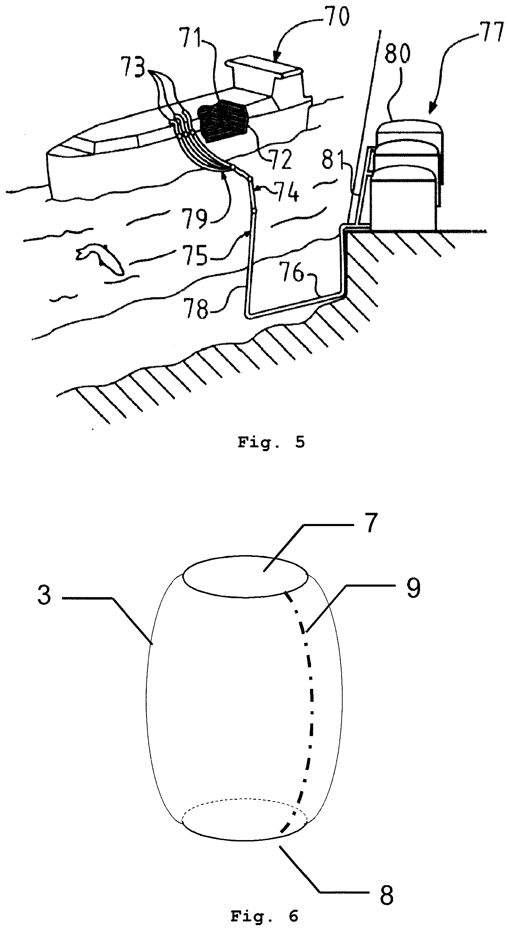

Cette prédécoupe peut être réalisée de différentes manières. Selon un mode de réalisation particulier, illustré à la figure 6, la nappe souple de solidarisation 3 comprend entre les ouvertures 7 et 8 une prédécoupe 9 s'étendant sur toute la longueur d'une surface latérale de la nappe souple de solidarisation 3 en regard de la surface latérale de la pile. En variante, la prédécoupe 9 peut s'étendre seulement sur une partie de la longueur de la surface latérale de la nappe souple de solidarisation 3, depuis une des ouvertures 7 et 8. L'orientation de la prédécoupe 9 peut être axiale comme représenté ou inclinée par rapport à l'axe, par exemple en forme d'hélice. La prédécoupe 9 peut être réalisée par perforation de la nappe souple de solidarisation 3 selon un motif en pointillé. Alternativement, la prédécoupe 9 peut être réalisée par passage d'un moyen tranchant sur une partie, ou la totalité, de la longueur de la nappe souple de solidarisation 3 de sorte à fragiliser la nappe souple de solidarisation 3 au niveau de la prédécoupe.

En particulier, la nappe souple de solidarisation 3 peut comprendre une pluralité de prédécoupes similaires à la prédécoupe 9. A l'usage, la prédécoupe 9 peut être déchirée après le montage du pré-assemblage 1 sur l'arbre 4 de sorte à permettre le retrait de la nappe souple de solidarisation 1.

Selon l'invention, illustré à la figure 4, la pile comprend des rondelles élastiques, aussi appelées rondelles de type Belleville. Afin d'obtenir une élasticité maximale, les rondelles Belleville sont disposées tête-bêche. Dans cette application, le nombre de rondelles est avantageusement impair.

Selon la pile réalisée, il peut arriver que le pré-assemblage ne soit pas symétrique au regard du montage sur l'arbre 4. Aussi, si les erreurs de composition de la pile sont évitées par le pré-assemblage, il convient encore d'éviter une erreur au montage où deux choix sont offerts. Pour cela, selon une autre caractéristique, il est avantageux de placer un marquage 5, visuel ou tactile, à fin de détrompage.

Pour cela le pré-assemblage 1 est avantageusement marqué. Cette marque peut être réalisée par gravure, par dépôt de matière, par peinture ou par vernis directement sur une des pièces 2 de la pile, avantageusement une des pièces 2 extrêmes.

Selon un mode de réalisation préférentiel en ce qu'il laisse les pièces 2 intouchées et qu'il est plus aisé à mettre en œuvre, ledit marquage 5 est réalisée par la nappe souple de solidarisation 3. Un tel marquage permet d'indiquer une orientation préférentielle du pré-assemblage 1 pour son montage sur l'arbre 4. Un tel marquage 5 peut, par exemple être une partie supplémentaire du film plastique, réalisé d'une autre couleur. Un exemple d'un tel marquage 5 est montré à la figure 3. La bande périphérique de forme rectangle, apte à venir s'enrouler autour de périphérie de la pile est complétée par des protubérances 5, avantageusement colorées. Après enroulement, ces protubérances 5 se retrouvent toutes autour d'un même trou 6 sur une surface d'extrémité de la pile, indiquant une orientation préférentielle du pré-assemblage 1.

L'invention concerne encore un procédé de fabrication d'un tel pré-assemblage 1 de pièces 2 aptes à être montées sur un arbre 4, telles des rondelles. Il comprend les étapes suivantes. Une première étape consiste à réaliser la pile d'au moins deux pièces. La pile correspond à la configuration de montage. Autrement dit, les pièces 2 sont disposées en types, nombres et orientations conformes aux besoins du montage mécanique. Ensuite une deuxième étape consiste à mettre en place une nappe souple de solidarisation 3 apte à solidariser lesdites au moins deux pièces 2 de la pile par enveloppement total ou partiel d'une surface latérale.

Il est possible, selon un mode de réalisation optionnel de vérifier la pile réalisée après sa réalisation. Ceci peut par exemple se faire par mesure de la dimension de la pile, selon la direction de l'arbre 4. Cette mesure de dimension ou de hauteur de la pile peut être réalisée de différentes manières, par exemple par un système de cale, par télémétrie laser ou par un pied à coulisse. Dans un cas de réalisation selon la figure 4, une telle mesure permet de vérifier le bon nombre et l'orientation des pièces 2. En effet, une rondelle Belleville manquante ou mal orientée modifie grandement la hauteur de la pile.

Un tel pré-assemblage 1, comportant un empilement de rondelles Belleville, peut être utilisé dans un organe de retenue pour assembler une paroi isolante, telle qu'une paroi pour cuve de stockage d'un fluide cryogénique.

Un organe de retenue ou coupleur réalisant l'ancrage d'un bloc isolant à une surface de support, par exemple une paroi porteuse d'un navire, est illustré à la figure 2 de la publication FR-A-2798902 ou encore à la figure 23 de la publication WO-A-2017103500. La publication FR-A-2798902 décrit un procédé de chargement ou déchargement d'un navire, dans lequel on achemine un fluide à travers des canalisations isolées depuis ou vers une installation de stockage flottante ou terrestre vers ou depuis la cuve du navire.

Dans ce cas, l'empilement de rondelles Belleville préassemblé est de préférence impair et disposé de manière que la surface d'extrémité concave soit tournée vers la platine métallique exerçant un appui sur le ou les blocs isolants et que la surface d'extrémité convexe soit tournée vers l'écrou vissé sur la tige filetée sur laquelle l'empilement est engagé.

L'écrou peut aussi faire partie de l'empilement préassemblé.

En référence à la figure 5, une vue écorchée d'un navire méthanier 70 montre une cuve étanche et isolée 71 de forme générale prismatique montée dans la double coque 72 du navire. La paroi de la cuve 71 comporte une barrière étanche primaire destinée à être en contact avec le GNL contenu dans la cuve, une barrière étanche secondaire agencée entre la barrière étanche primaire et la double coque 72 du navire, et deux barrières isolante agencées respectivement entre la barrière étanche primaire et la barrière étanche secondaire et entre la barrière étanche secondaire et la double coque 72.

De manière connue en soi, des canalisations de chargement/déchargement 73 disposées sur le pont supérieur du navire peuvent être raccordées, au moyen de connecteurs appropriées, à un terminal maritime ou portuaire pour transférer une cargaison de GNL depuis ou vers la cuve 71.

La figure 5 représente un exemple de terminal maritime comportant un poste de chargement et de déchargement 75, une conduite sous-marine 76 et une installation à terre 77. Le poste de chargement et de déchargement 75 est une installation fixe off-shore comportant un bras mobile 74 et une tour 78 qui supporte le bras mobile 74. Le bras mobile 74 porte un faisceau de tuyaux flexibles isolés 79 pouvant se connecter aux canalisations de chargement/déchargement 73. Le bras mobile 74 orientable s'adapte à tous les gabarits de méthaniers. Une conduite de liaison non représentée s'étend à l'intérieur de la tour 78. Le poste de chargement et de déchargement 75 permet le chargement et le déchargement du méthanier 70 depuis ou vers l'installation à terre 77. Celle-ci comporte des cuves de stockage de gaz liquéfié 80 et des conduites de liaison 81 reliées par la conduite sous-marine 76 au poste de chargement ou de déchargement 75. La conduite sous-marine 76 permet le transfert du gaz liquéfié entre le poste de chargement ou de déchargement 75 et l'installation à terre 77 sur une grande distance, par exemple 5 km, ce qui permet de garder le navire méthanier 70 à grande distance de la côte pendant les opérations de chargement et de déchargement.

Pour engendrer la pression nécessaire au transfert du gaz liquéfié, on met en œuvre des pompes embarquées dans le navire 70 et/ou des pompes équipant l'installation à terre 77 et/ou des pompes équipant le poste de chargement et de déchargement 75.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre des revendications.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Pré-assemblage (1) de pièces (2) aptes à être montées sur un arbre (4), comprenant une pile **caractérisé en ce qu'**au moins deux rondelles Belleville (2) disposées en configuration de montage dans laquelle les rondelles sont disposées tête-bêche, dans lequel il comprend une nappe souple de solidarisation (3) apte à solidariser lesdites au moins deux rondelles Belleville (2) de la pile par enveloppement total ou partiel d'une surface latérale de la pile, où la nappe souple de solidarisation (3) comprend un adhésif pour adhérer sur les rondelles Belleville (2) et/ou sur elle-même (3).

2. Pré-assemblage (1) selon la revendication 1, où la nappe souple de solidarisation (3) comprend un film plastique.

3. Pré-assemblage (1) selon l'une quelconque des revendications 1 et 2, où la nappe souple de solidarisation (3) comprend une gaine thermo rétractée.

4. Pré-assemblage (1) selon l'une quelconque des revendications 1 à 3, où la nappe souple de solidarisation (3) est épargnée ou fragilisée au niveau du passage de l'arbre (4) .

5. Pré-assemblage (1) selon l'une quelconque des revendications 1 à 4, où la nappe souple de solidarisation (3) comprend au moins une bande périphérique entourant complétement la surface latérale de la pile.

6. Pré-assemblage (1) selon l'une quelconque des revendications 1 à 5, où la nappe souple de solidarisation (3) comprend au moins une bande axiale s'étendant selon une direction axiale de la pile sur une portion de la surface latérale de la pile.

7. Pré-assemblage (1) selon l'une quelconque des revendications 1 à 6, où la nappe souple de solidarisation (3) est prédécoupée pour faciliter son retrait après montage.

8. Pré-assemblage (1) selon l'une quelconque des revendications 1 à 7, où la pile comprend des rondelles Belleville en nombre impair.

9. Pré-assemblage (1) selon la revendication 8, dans lequel la pile comprend en outre un écrou.

10. Pré-assemblage (1) selon l'une quelconque des revendications 1 à 9, ou le pré-assemblage (1) comprend un marquage (5), de manière à indiquer une orientation axiale de la pile.

11. Paroi isolante, notamment pour cuve de stockage d'un fluide cryogénique, **caractérisée en ce qu'**elle comporte un organe de retenue incluant au moins un pré-assemblage (1) selon l'une quelconque des revendications 1 à 10, ledit organe de retenue mettant en prise au moins un bloc isolant pour retenir le bloc isolant sur une surface de support.

12. Navire (70) pour le transport d'un fluide, le navire comportant une double coque (72) et une cuve (71) étanche et thermiquement isolante disposée dans la double coque, la cuve étanche et thermiquement isolante incluant une paroi isolante selon la revendication 11.

13. Système de transfert pour un fluide, le système comportant un navire (70) selon la revendication 12, des canalisations isolées (73, 79, 76, 81) agencées de manière à relier la cuve (71) installée dans la coque du navire à une installation de stockage flottante ou terrestre (77) et une pompe pour entrainer un flux de fluide à travers les canalisations isolées depuis ou vers l'installation de stockage flottante ou terrestre vers ou depuis la cuve du navire.

14. Procédé de fabrication d'un pré-assemblage (1) de pièces (2) aptes à être montées sur un arbre (4), **caractérisé en ce qu'**il comprend les étapes suivantes :
- réalisation d'une pile comprenant au moins deux rondelles Belleville (2) disposées en configuration de montage dans laquelle les rondelles sont disposées tête-bêche,
- mise en place d'une nappe souple de solidarisation (3) apte à solidariser lesdites au moins deux rondelles Belleville (2) de la pile par enveloppement total ou partiel d'une surface latérale de la pile, où la nappe souple de solidarisation (3) comprend un adhésif pour adhérer sur les rondelles Belleville (2) et/ou sur elle-même (3).

15. Procédé selon la revendication 14, comprenant encore, après l'étape de réalisation, une étape de vérification de la pile réalisée, par mesure de la dimension de la pile, selon la direction de l'arbre (4).

16. Procédé de chargement ou déchargement d'un navire (70) selon la revendication 12, dans lequel on achemine un fluide à travers des canalisations isolées (73, 79, 76, 81) depuis ou vers une installation de stockage flottante ou terrestre (77) vers ou depuis la cuve (71) du navire (70) selon la revendication 12.

## Patentansprüche

1. Vormontage (1) von auf einer Ache (4) montierbaren Teilen, umfassend einen Stapel, welcher **dadurch gekennzeichnet ist, dass** mindestens zwei Federscheiben (2) montiert angeordnet sind, wobei die Scheiben entgegengesetzt angeordnet sind, wobei die Vormontage eine biegsame Verbindungsmatte (3) umfasst, welche dazu geeignet ist, die mindestens zwei Federscheiben (2 ) durch vollständige oder teilweise Umhüllung einer Seitenfläche des Stapels zu verbinden, wobei die biegsame Verbindungsmatte (3) eine Haftmittel umfasst, um an den Federscheiben und/oder an sich selbst (3) zu haften.

2. Vormontage (1) gemäß Anspruch 1, wobei die biegsame Verbindungsmatte eine Kunststofffolie umfasst.

3. Vormontage (1) gemäß einem der Ansprüche 1 und 2, wobei die biegsame Verbindungsmatte einen wärmegeschrumpften Schlauch umfasst.

4. Vormontage (1) gemäß einem der Ansprüche 1 bis 3, wobei die biegsame Verbindungsmatte (3) auf der Höhe des Übergangs der Achse (4) ausgespart oder geschwächt ist.

5. Vormontage (1) gemäß einem der Ansprüche 1 bis 4, wobei die biegsame Verbindungsmappe mindestens ein umlaufendes Band umfasst, welches die Seitenfläche des Stapels vollständig umgibt.

6. Vormontage (1) gemäß einem der Ansprüche 1 bis 5, wobei die biegsame Verbindungsmatte mindestens ein axiales Band umfasst, welches sich in einer axialen Richtung des Stapels auf einem Teil der Seitenfläche des Stapels erstreckt.

7. Vormontage (1) gemäß einem der Ansprüche 1 bis 6, wobei die biegsame Verbindungsmatte (3) vorgeschnitten ist, um dessen Entfernung nach der Montage zu erleichtern.

8. Vormontage (1) gemäß einem der Ansprüche 1 bis 7, wobei der Stapel Federscheiben in ungrader Anzahl umfasst.

9. Vormontage (1) gemäß Anspruch 8, wobei der Stapel weiterhin eine Mutter umfasst.

10. Vormontage (1) gemäß einem der Ansprüche 1 bis 9, wobei die Vormontage (1) eine Markierung umfasst, um eine axiale Ausrichtung des Stapels anzuzeigen.

11. Isolierende Wand, insbesondere für einen Speichertank einer kyrogenen Flüssigkeit, **dadurch gekennzeichnet, dass** sie ein Halteorgan umfasst, welches mindestens eine Vormontage (1) gemäß einem der Ansprüche 1 bis 10 umfasst, wobei das Halteorgan mindestens einen Isolierblock in Eingriff nimmt, um den Isolierblock auf der Tragefläche zu halten.

12. Schiff (79) zum Transport einer Flüssigkeit, wobei das Schiff eine Doppelhülle (72) und einen in der Doppelhülle angeordneten dichten und wärmeisolierenden Tank (71) umfasst, wobei der dichte und wärmeisolierende Tank eine isolierende Wand gemäß Anspruch 11 umfasst.

13. Transfersystem für eine Flüssigkeit, wobei das System ein Schiff (70) gemäß Anspruch 12, isolierte Rohrleitungen (73,79, 76,81), welche so angeordnet sind, dass sie den in der Schiffshülle angeordneten Tank (71) mit einer schwimmenden oder erdverbundenen Speicheranlage (77) verbinden, und eine Pumpe umfasst, um eine Flüssigkeit durch die isolierten Rohrleitungen von oder zu der schwimmenden oder erdverbundenen Speicheranlage zu oder von dem Tank des Schiffs zuleiten.

14. Verfahren zur Herstellung einer Vormontage (1) von auf einer Ache (4) montierbaren Teilen, **dadurch gekennzeichnet, dass** es die folgenden Schritte umfasst:
- Verwirklichung eines Stapels umfassend mindestens zwei montierte Federscheiben (2), wobei die Scheiben entgegengesetzt angeordnet sind,
- Errichtung einer biegsamen Verbindungsmatte (3), welche dazu geeignet ist, die mindestens zwei Federscheiben (2 ) durch vollständige oder teilweise Umhüllung einer Seitenfläche des Stapels zu verbinden, wobei die biegsame Verbindungsmatte (3) eine Haftmittel umfasst, um an den Federscheiben und/oder an sich selbst (3) zu haften.

15. Verfahren gemäß Anspruch 14, umfassend weiterhin, nach dem Schritt der Verwirklichung einen Schritt der Prüfung des verwirklichten Stapels, durch Messen der Größe des Stapels in Richtung der Achse (4).

16. Verfahren zur Be- und Entladung eines Schiffes (70) gemäß Anspruch 12, wobei eine Flüssigkeit von oder zu einer schwimmenden oder erdverbundenen Speicheranlage (77) zu oder von dem Tank des Schiffes (71) durch isolierte Rohrleitungen (73, 79, 76, 81) geleitet wird.

## Claims

1. A pre-assembly (1) of parts (2) capable of being mounted on a shaft (4), comprising a stack **characterized in that** at least two Belleville washers (2) arranged in an assembly configuration, wherein the washers are disposed head-to-tail, wherein it comprises a flexible securing sheet (3) capable of securing said at least two Belleville washers (2) of the stack by totally or partially enclosing a lateral surface of the stack, where the flexible securing sheet (3) comprises an adhesive to adhere to the Belleville washers (2) and/or to itself (3).

2. The pre-assembly (1) as claimed in claim 1, in which the flexible securing sheet (3) comprises a plastic film.

3. The pre-assembly (1) as claimed in either one of claims 1 or 2, in which the flexible securing sheet (3) comprises a heat-shrunk sleeve.

4. The pre-assembly (1) as claimed in any one of claims 1 to 3, in which the flexible securing sheet (3) is pierced or weakened at the level of the passage of the shaft (4).

5. The pre-assembly (1) as claimed in any one of claims 1 to 4, in which the flexible securing sheet (3) comprises at least one peripheral strip completely surrounding the lateral surface of the stack.

6. The pre-assembly (1) as claimed in any one of claims 1 to 5, in which the flexible securing sheet (3) comprises at least one axial strip extending in an axial direction of the stack over a portion of the lateral surface of the stack.

7. The pre-assembly (1) as claimed in any one of claims 1 to 6, in which the flexible securing sheet (3) is precut to facilitate its removal after assembly.

8. The pre-assembly (1) as claimed in any one of claims 1 to 7, in which the stack comprises an odd number of Belleville washers.

9. The pre-assembly (1) as claimed in claim 8, in which the stack further comprises a nut.

10. The pre-assembly (1) as claimed in any one of claims 1 to 9, in which the pre-assembly (1) comprises a marking (5) so as to indicate an axial orientation of the stack.

11. An insulating wall, in particular for tanks for storing a cryogenic fluid, **characterized in that** it includes a retaining member including at least one pre-assembly (1) as claimed in any one of claims 1 to 10, said retaining member engages at least one insulating block to retain the insulating block on a support surface.

12. A ship (70) for transporting a fluid, the ship including a double hull (72) and a fluid-tight and thermally insulative tank (71) disposed in the double hull, the fluid-tight and thermally insulating tank including an insulating wall as claimed in claim 11.

13. A transfer system for a fluid, the system including a ship (70) as claimed in claim 12, insulated pipes (73, 79, 76, 81) adapted to connect the tank (71) installed in the hull of the ship to a floating or terrestrial storage installation (77) and a pump for driving a flow of fluid through the insulated pipes from or to the floating or terrestrial storage installation to or from the tank of the ship.

14. A method of fabricating a pre-assembly (1) of parts (2) capable of being mounted on a shaft (4), **characterized in that** it comprises the following steps:
- producing a stack comprising at least two Belleville washers (2) disposed in an assembly configuration, wherein the washers are disposed head-to-tail,
- applying a flexible securing sheet (3) capable of securing said at least two Belleville washers (2) of the stack by totally or partially enclosing a lateral surface of the stack, in which the flexible securing sheet (3) comprises an adhesive to adhere to the Belleville washers (2) and/or to itself (3).

15. The method as claimed in claim 14, further comprising, after the production step, a step of checking the stack produced by measuring the dimension of the stack in the direction of the shaft (4).

16. A method of loading or offloading a ship (70) as claimed in claim 12, in which a fluid is fed through insulated pipes (73, 79, 76, 81) from or to a floating of terrestrial storage installation (77) to or from the tank (71) of the ship (70) as claimed in claim 12.
